(19) Europäisches Patentamt
European Patent Office
Office européen des brevets

(11) **EP 2 141 627 A1**

(12) **EUROPEAN PATENT APPLICATION**

(43) Date of publication:
06.01.2010 Bulletin 2010/01

(51) Int Cl.:
*G06F 21/02* (2006.01)     *G06F 21/04* (2006.01)

(21) Application number: 09173559.7

(22) Date of filing: 04.04.2005

(84) Designated Contracting States:
AT BE BG CH CY CZ DE DK EE ES FI FR GB GR HU IE IS IT LI LT LU MC NL PL PT RO SE SI SK TR

(62) Document number(s) of the earlier application(s) in accordance with Art. 76 EPC:
05102636.7 / 1 710 656

(71) Applicant: **Research in Motion Limited**
Waterloo, ON N2L 3W8 (CA)

(72) Inventors:
• **Brown, Michael S.**
Waterloo Ontario N2K 4B1 (CA)
• **Brown, Michael K.**
Kitchener Ontario N2M 2Z2 (CA)

• **Little, Herb**
Waterloo Ontario N2T 2V8 (CA)
• **Adams, Neil**
Waterloo Ontario N2K 4E4 (CA)

(74) Representative: **Moore, Barry et al**
Hanna Moore & Curley
13 Lower Lad Lane
Dublin 2 (IE)

Remarks:
This application was filed on 20-10-2009 as a divisional application to the application mentioned under INID code 62.

(54) **Securely using a display to exchange information**

(57) A first device (104) has a display (110) that is able to show a confidential value. The confidential value is to be exchanged with a second device (102). The confidential value is cleared from the display after an indication is received from the second device that input expected to be identical to the confidential value has been inputted as the second device, wherein the input is not included in the indication.

FIG. 3

**Description**

In general, wireless communication is insecure and vulnerable to attacks. Various techniques may be employed to secure a wireless communication link or to make it less vulnerable to attacks. For example, cryptographic techniques may be employed to secure a wireless communication link. In symmetric-key systems (also known as "secret-key systems"), a single, common cryptographic key is stored by two communication devices. In public-key systems (also known as "public-private pair systems"), each communication device stores its own private key and freely distributes its own public key.

Various security concerns exist with the use of cryptographic techniques. For example, secrets need to be shared between the two communication devices in a secure and authenticated manner. Especially in the case of mobile devices, it may be desirable to have only those two devices know the secret and not require the intervention/involvement of an Information Technology (IT) administrator. Also, it may be desirable to verify that the devices share a secret without exposing that secret to others, and to use the secret to generate a key to secure a communication link between the devices.

BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a schematic diagram of an exemplary system;

Figure 2 is a flowchart of an exemplary method to be implemented by the devices in the system of Figure 1;

Figure 3 is a flowchart of an exemplary method for establishing a secret between two devices;

Figure 4 is a flowchart of an exemplary method for generating a symmetric key from a secret;

Figure 5 is a flowchart of an exemplary method for generating a symmetric key; and

Figure 6 is a block diagram of the exemplary system of Figure 1.

It will be appreciated that for simplicity and clarity of illustration, elements shown in the figures have not necessarily been drawn to scale. For example, the dimensions of some of the elements may be exaggerated relative to other elements for clarity.

DETAILS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

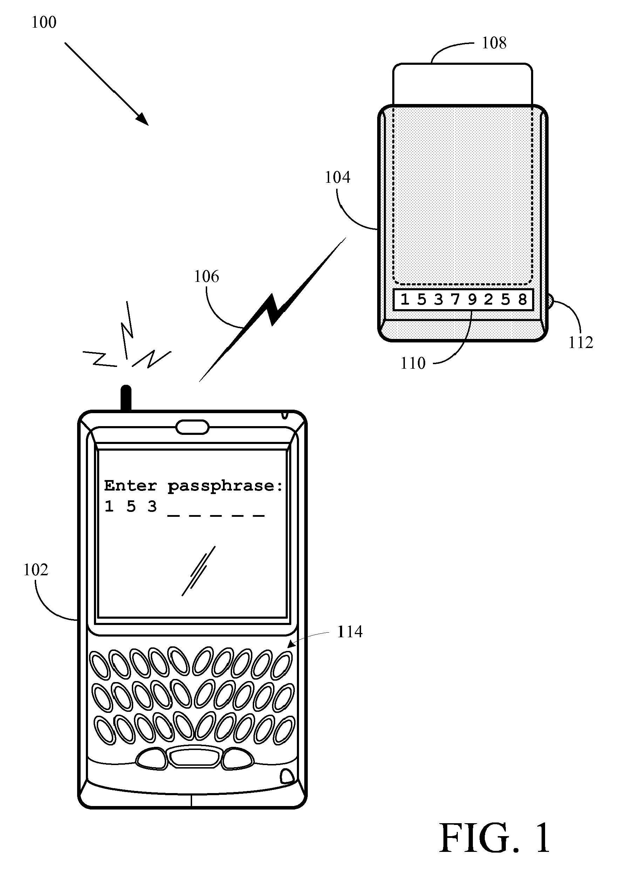

Reference is made to Figure 1, which is a schematic diagram of an exemplary system, according to some embodiments of the invention. A system 100 includes a mobile device 102 and a wireless smart card reader 104. Mobile device 102 and smart card reader 104 are able to communicate over a wireless communication link 106. A non-exhaustive list of examples of wireless local area network standards for wireless communication link 106 includes the Institute of Electrical and Electronic Engineers (IEEE) for Wireless LAN MAC and Physical layer (PHY) 802.11 a, b, g and n specifications or future related standards, the Bluetooth® standard, the Zigbee™ standard and the like.

A smart card 108 is shown inserted into smart card reader 104. Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g., a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device. The person whose security information is stored on smart card 108 may use smart card reader 104 for identification and to digitally sign and/or decrypt messages sent by device 102.

For example, mobile device 102 may be able to send and receive e-mail messages via an e-mail server (not shown). If, for example, the Secure Multipurpose Internet Mail Extensions (S/MIME) protocol is used, e-mail messages received at mobile device 102 are encrypted using a symmetric algorithm with a random session key generated by the sender of the e-mail message. The e-mail message also includes the session key, encrypted using the public key of the recipient. Upon receipt of an encrypted e-mail message, mobile device 102 may extract the encrypted session key and send it to smart card reader 104 via communication link 106. Smart card reader 104 may send the encrypted session key to smart card 108, and the decryption engine of smart card 108 may decrypt the encrypted session key using the recipient's private decryption key, which is stored in smart card 108. Smart card reader 104 may retrieve the decrypted session key from smart card 108 and forward it to mobile device 102 via communication link 106 so that mobile device 102 can decrypt the received e-mail message. The smart card 108 may prevent unauthorized use of the recipient's private decryption key by requiring that a password or personal identification number (PIN) be supplied before allowing the decryption operation to proceed.

Similarly, to add a digital signature to an e-mail message being sent by mobile device 102, mobile device 102 may send a hash of the contents of the e-mail message to smart card reader 104 over communication link 106. Smart card reader 104 may pass the hash to smart card 108, which may produce a digital signature from the hash and the sender's private signing key, which is stored in smart card 108. Smart card 108 may then pass the digital signature to smart card reader 104, which may forward it to mobile device 102 via communication link 106 so that mobile device 102 can transmit it along with the e-mail message to the e-mail server. Again, smart card 108 may prevent unauthorized use of the recipient's private signing key by requiring that a password or PIN be supplied before allowing the signing operation to proceed.

The unencrypted session key should be sent securely over communication link 106 from smart card reader 104 to mobile device 102 to prevent a third party from retrieving the session key from communication link 106. Similarly, the hash to be signed should be sent authentically over communication link 106 from smart card reader 104 to mobile device 102 to prevent a third party from modifying the hash and thereby causing smart card 108 to produce a signature using a hash different from the hash of the intended message. Smart card reader 104 and mobile device 102 may each store a common, symmetric key and use a symmetric algorithm to secure communications over communication link 106. Alternatively, smart card reader 104 and mobile device 102 may store their own private keys and each other's public keys, and use an asymmetric algorithm combined with a symmetric algorithm to secure communications over communication link 106.

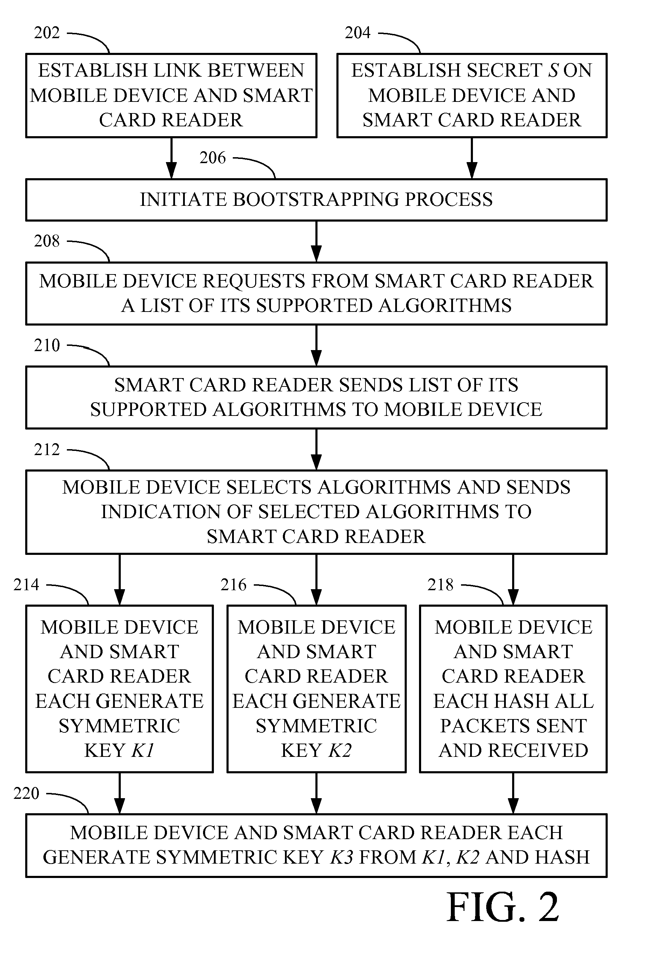

In order to establish the symmetric key used to secure communications over communication link 106, mobile device 102 and smart card reader 104 may use the following method, as illustrated in the flowchart of Figure 2, to which reference is additionally made.

At 202, a link between mobile device 102 and smart card reader 104 is established. This link may be, for example, wireless communication link 106.

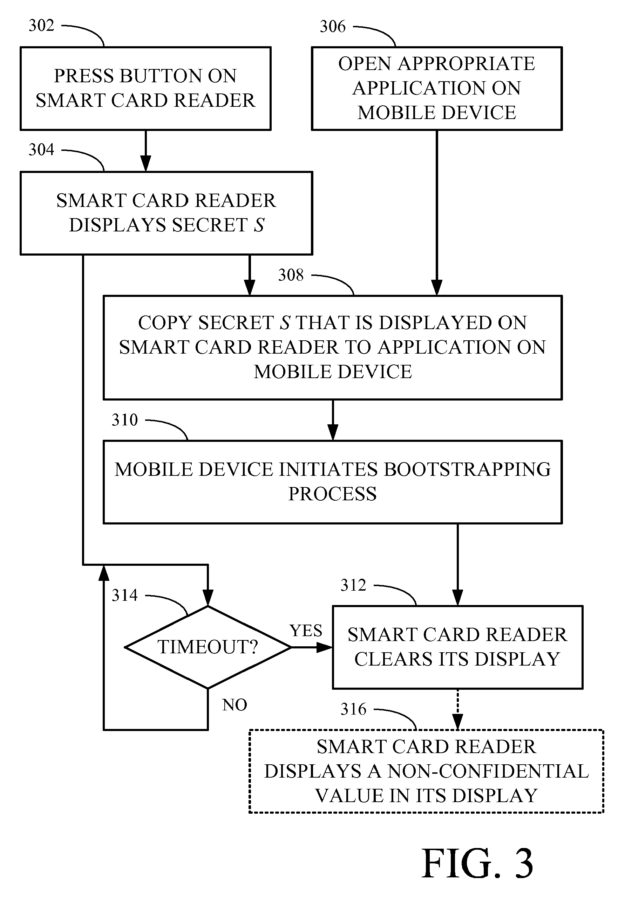

At 204, a short secret $S$ is established locally at mobile device 102 and smart card reader 104. Any method to establish the short secret $S$ securely and authentically is suitable. By "locally", it is meant that the establishment of this secret does not require any involvement or intervention by an Information Technology (IT) administrator. Moreover, since the user of mobile device 102 and smart card reader 104 will perform the method of Figure 2 on an as-needed basis, the establishment of the secret ought to be a simple procedure. An exemplary method to establish the short secret $S$ using a display 110 is described hereinbelow with respect to Figure 3.

Establishing the connection between mobile device 102 and smart card reader 104 may occur before, after or concurrently with establishing the short secret $S$ locally on mobile device 102 and smart card reader 104.

Once the connection between mobile device 102 and smart card reader 104 has been established and the short secret $S$ has been established locally on mobile device 102 and smart card reader 104, a "bootstrapping" process to generate a strong secret from the short secret $S$ is initiated at 206. For example, the short secret $S$ may originate at smart card reader 104, and once it has been shared with mobile device 102, mobile device 102 may initiate the bootstrapping process by sending an appropriate message (or just a packet) to smart card reader 104 over communication link 106.

The bootstrapping process involves at least one public key algorithm, at least one symmetric key algorithm, at least one hashing function, and any other security or non-security related information such as a compression algorithm. A non-exhaustive list of examples of public key algorithms includes Diffie-Hellman (DH) on a large prime-order finite group and DH on an elliptical curve (EC) group. At 208, mobile device 102 requests from smart card reader 104 a list of its supported algorithms. At 210, smart card reader 104 sends a list of its supported algorithms to mobile device 102.

At 212, mobile device 102 selects the algorithms to be used in the subsequent steps of the method and sends an indication of the selected algorithms to smart card reader 104. The selected algorithms include:

> a) one or two selected public key algorithms (e.g. the parameters or the name of the elliptic curve group, or the prime and generator of the large prime-order finite group);

> b) a selected symmetric key algorithm (e.g. Advanced Encryption Standard (AES) and the key size, or Triple Data Encryption Standard (DES), or the like); and

> c) a selected hash function (e.g., Message Digest 5 (MD5), Secure Hashing Algorithm 1 (SHA-1), SHA-256, or the like).

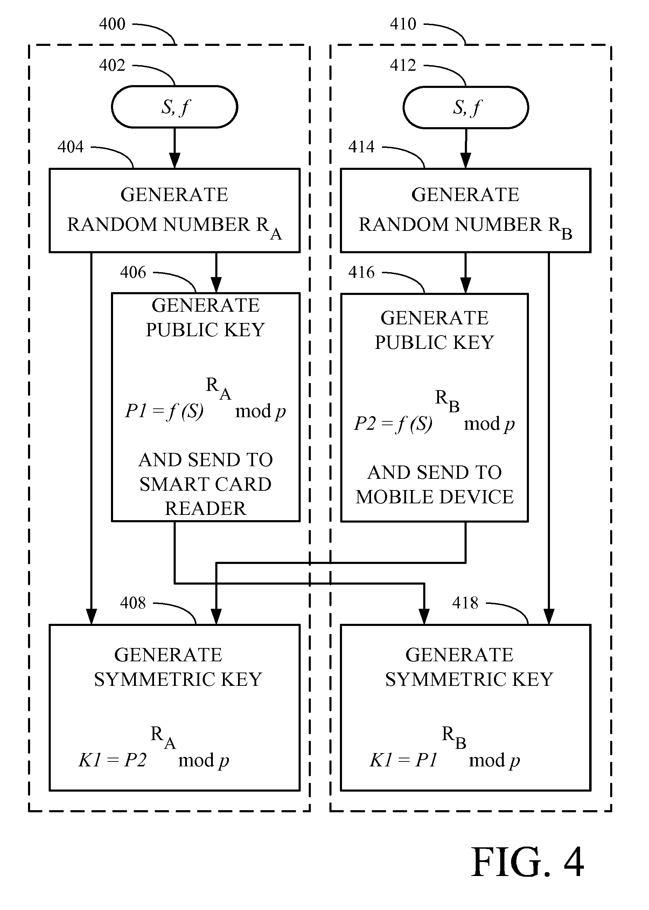

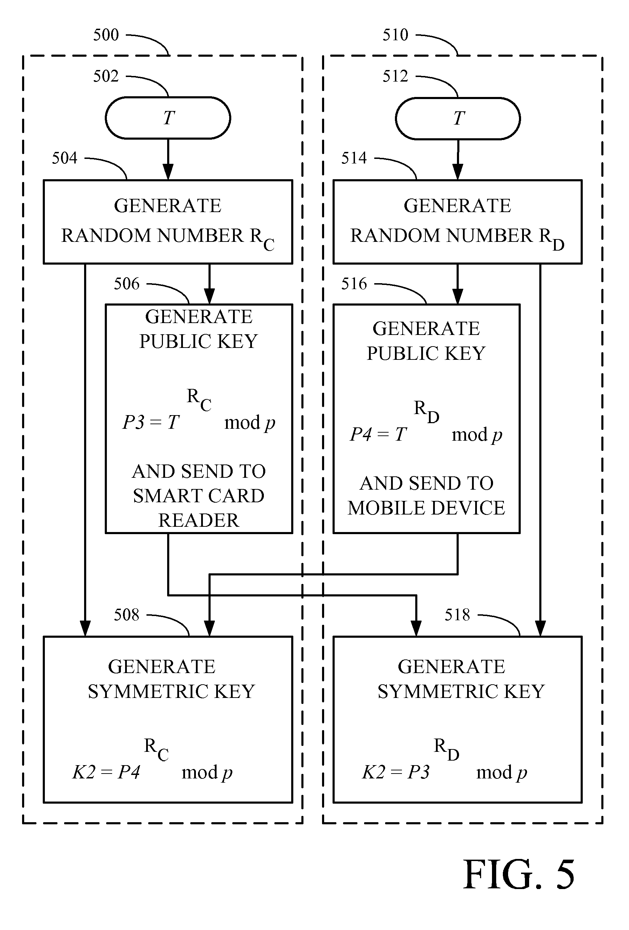

At 214, mobile device 102 and smart card reader 104 each generate the same symmetric key $K1$ from the short secret $S$, as described in further detail hereinbelow with respect to Figure 4. At 216, mobile device 102 and smart card reader 104 each generate the same symmetric key $K2$, as described in further detail hereinbelow with respect to Figure 5. Generating symmetric key $K1$ may occur before, after or concurrently with generating symmetric key $K2$.

At 216, mobile device 102 and smart card reader 104 each hash all the packets sent and received during the generation of symmetric keys $K1$ and $K2$ to produce the hash result $H$. For example, the selected hash function may be applied to the packets as the packets are sent and received, so that this is concurrent with generating the symmetric keys $K1$ and $K2$. In another example, the packets may be stored in a buffer and then the selected hash function may be applied to the packets after the symmetric keys $K1$ and $K2$ have been generated.

Once symmetric keys $K1$ and $K2$ have been generated, and mobile device 102 and smart card reader 104 have produced the hash result $H$, mobile device 102 and smart card reader 104 each generate the same symmetric key $K3$ from $K1, K2$ and the hash result $H$. For example, the selected hash function may be used to combine keys $K1$ and $K2$ and the hash result $H$ into $K3$.

Symmetric key $K3$ may then be used to secure communications over communication link 106.

Reference is now made to Figure 3, which is a flowchart of an exemplary method for establishing a secret between two devices, according to some embodiments of the invention. At 302, a user may press a button 112 (Figure 1) or other suitable input component of smart card reader 104, which will cause the short secret $S$, for example, "15379258", to be shown on display 110 of smart card reader 104 at 304. At 306, a user may open an appropriate application on mobile device 102. Causing the short secret $S$ to be shown on display 110 may occur before, after or concurrently with opening the appropriate application on mobile device 102.

Once the short secret $S$ has been shown on display 110 and the appropriate application has been opened on mobile device 102, the user may copy the short secret $S$ to the application on mobile device 102 at 308 using an input component of mobile device 102, for example a keyboard 114. As illustrated in Figure 1, the user has entered the first 3 digits of the 8-digit passphrase that is the short secret $S$. Although this example uses a numerical value for short secret $S$, any type of value may be used providing the value can be shown in display 110 and inputted using the input component of mobile device 102. Since the short secret $S$ is short, it is simple for the user to copy the secret to the application on mobile device 102. However, the short secret $S$ is too short to be suitable for use as a reliable symmetric key. Copying the short secret $S$ to the application on mobile device 102 may result in mobile device 102 initiating the bootstrapping process (an example of block 206 of Figure 2) at 310, for example, by sending an appropriate message (or just a packet) to smart card reader 104 over communication link 106.

To protect the short secret $S$ from prying eyes, at 312, smart card reader 104 may clear display 110 once smart card reader 104 receives the message or packet sent by mobile device 102 to initiate the bootstrapping process.

Smart card reader 104 may also implement a timeout, and if, as checked at 314, the message or packet initiating the bootstrapping process has not been received by smart card reader 104 within the predefined period of time, which may be calculated, for example, from the time that the secret $S$ is first shown on display 110, smart card reader 104 may clear display 110.

Once smart card reader 104 has cleared display 110, smart card reader 104 may optionally show a non-confidential (possibly random) value on display 110 so that a snooper looking at display 110 will not know whether the value on display 110 is the secret or not.

Reference is now made to Figure 4, which is a flowchart of an exemplary method for generating symmetric key $K1$ from the short secret $S$. The method of Figure 4 is based on the simplified password-based exponential key exchange (SPEKE) method described in U.S. Patent No. 6,226,383 to Jablon. All variations of the SPEKE method are suitable for generating symmetric key $K1$ from the short secret $S$.

The method includes a portion 400 to be implemented by mobile device 102 and a portion 410 to be implemented by smart card reader 104. At 402, mobile device 102 has possession of the secret $S$ and one of the selected public key algorithms. For example, if the selected public key algorithm for generating symmetric key $K1$ is DH on a large prime-order finite group for a particular prime $p$, the function $f$, when applied to the secret $S$, results in a generator of the group. U.S. Patent No. 6,226,383 discusses factors to consider when selecting function $f$. Similarly, at 412, smart card reader 104 has possession of the secret $S$ and the selected public key algorithm for generating symmetric key $K1$.

At 404, mobile device 102 generates a random number $R_A$ in the range of 2 to $p$-1. Then at 406, mobile device 102 generates a short-term public key $P_1$ by raising the generator $f(S)$ to the power $R_A$ within the group and sends public key $P_1$ to smart card reader 104. In the example of DH on the large prime-order finite group for $p$, this is calculated as follows:

$$P_1 = f(S)^{R_A} \mod p$$

Similarly, at 414, smart card reader 104 generates a random number $R_B$ in the range of 2 to $p$-1. Then at 416, smart card reader 104 generates a short-term public key $P_2$ by raising the generator $f(S)$ to the power $R_B$ within the group and sends public key $P_2$ to mobile device 102. In the example of DH on the large prime-order finite group for $p$, this is calculated as follows:

$$P_2 = f(S)^{R_B} \mod p$$

Generating the random number $R_B$ at smart card reader 104 and generating public key $P_2$ and sending it to mobile device 102 may occur before, after or concurrently with generating the random number $R_A$ at mobile device 102 and generating public key $P_1$ and sending it to smart card reader 104.

Once mobile device 102 has generating the random number $R_A$ and has received public key $P_2$, mobile device 102 generates a symmetric key K1 at 408. In the example of DH on the large prime-order finite group for p, the symmetric key K1 is calculated as follows:

$$KI = P_2^{R_A} \bmod p = f(S)^{R_B R_A} \bmod p$$

Once smart card reader 104 has generating the random number $R_B$ and has received public key $P_1$, smart card reader 104 generates the symmetric key K1 at 418. In the example of DH on the large prime-order finite group for p, the symmetric key K1 is calculated as follows:

$$KI = P_1^{R_B} \bmod p = f(S)^{R_A R_B} \bmod p$$

Since the operations on the elements of the group are commutative, the two calculations (at mobile device 102 and smart card reader 104) yield the same symmetric key. Generating the symmetric key K1 at mobile device 102 may occur before, after or concurrently with generating the symmetric key K1 at smart card reader 104.

Reference is now made to Figure 5, which is a flowchart of an exemplary method for generating symmetric key K2. The method of Figure 5 is based on well-known Diffie-Hellman exponential key exchange techniques.

The method includes a portion 500 to be implemented by mobile device 102 and a portion 510 to be implemented by smart card reader 104. At 502, mobile device 102 has possession of one of the selected public key algorithms, which may be the same as or different from the selected public key algorithm used to generate symmetric key K1. For example, if the selected public key algorithm for generating symmetric key K2 is DH on a large prime-order finite group for a particular prime p, mobile device 102 has possession of a known, published generator T of the group. Similarly, at 512, smart card reader 104 has possession of the selected public key algorithm for generating symmetric key K2.

At 504, mobile device 102 generates a random number $R_C$ in the range of 2 to p-1. Then at 506, mobile device 102 generates a short-term public key P3 by raising the generator T to the power $R_C$ within the group and sends public key P3 to smart card reader 104. In the example of DH on the large prime-order finite group for p, this is calculated as follows:

$$P3 = T^{R_C} \bmod p$$

Similarly, at 514, smart card reader 104 generates a random number $R_D$ in the range of 2 to p-1. Then at 516, smart card reader 104 generates a short-term public key P4 by raising the generator T to the power $R_D$ within the group and sends public key P4 to mobile device 102. In the example of DH on the large prime-order finite group for p, this is calculated as follows:

$$P4 = T^{R_D} \bmod p$$

Generating the random number $R_D$ at smart card reader 104 and generating public key P4 and sending it to mobile device 102 may occur before, after or concurrently with generating the random number $R_C$ at mobile device 102 and generating public key P3 and sending it to smart card reader 104.

Once mobile device 102 has generating the random number $R_C$ and has received public key P4, mobile device 102 generates a symmetric key K2 at 508. In the example of DH on the large prime-order finite group for p, the symmetric key K2 is calculated as follows:

$$K2 = P4^{R_C} \bmod p = T^{R_D R_C} \bmod p$$

Once smart card reader 104 has generating the random number $R_D$ and has received public key P3, smart card reader 104 generates the symmetric key K2 at 518. In the example of DH on the large prime-order finite group for p, the symmetric key K2 is calculated as follows:

$$K2 = P3^{R_D} \bmod p = T^{R_C R_D} \bmod p$$

Since the operations on the elements of the group are commutative, the two calculations (at mobile device 102 and smart card reader 104) yield the same symmetric key. Generating the symmetric key K2 at mobile device 102 may occur before, after or concurrently with generating the symmetric key K2 at smart card reader 104.

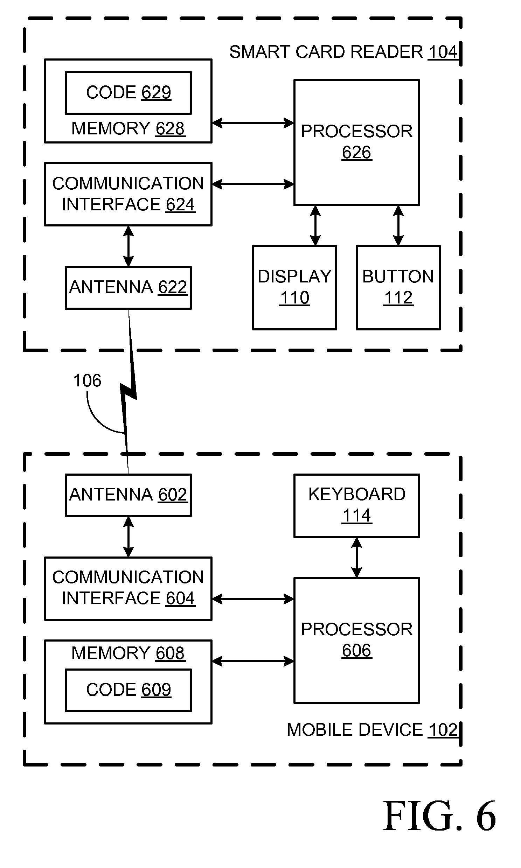

Figure 6 is a block diagram of system 100, according to some embodiments of the invention. For clarity, some components of mobile device 102 and smart card reader 104 are not shown in Figure 6 and are not described explicitly below.

Mobile device 102 includes an antenna 602 and smart card reader 104 includes an antenna 622. A non-exhaustive list of examples for antennae 602 and 622 includes dipole antennae, monopole antennae, multilayer ceramic antennae, planar inverted-F antennae, loop antennae, shot antennae, dual antennae, omnidirectional antenna and any other suitable antennae.

Mobile device 102 also includes a communication interface 604 coupled to antenna 602. Smart card reader 104 includes a communication interface 624 coupled to antenna 622. A non-exhaustive list of examples for standards with which communication interfaces 604 and 624 may be compatible includes 802.11 a, b, g and n and future related standards, the Bluetooth® standard, the Zigbee™ standard and the like.

Mobile device 102 also includes a processor 606 coupled to communication interface 604 and to keyboard 114. Mobile device 102 also includes a memory 608, which may be fixed in or removable from mobile device 102. Memory 608 may be coupled to processor 606 or partly embedded in processor 606. Communication interface 604 and processor 606 may be part of the same integrated circuit or in separate integrated circuits. Similarly, processor 606 and memory 608 may be part of the same integrated circuit or in separate integrated circuits.

Smart card reader 104 also includes a processor 626 coupled to communication interface 624, to display 110 and to button 112. Smart card reader 104 also includes a memory 628, which may be fixed in or removable from smart card reader 104. Memory 628 may be coupled to processor 626 or partly embedded in processor 626. Communication interface 624 and processor 626 may be part of the same integrated circuit or in separate integrated circuits. Similarly, processor 626 and memory 628 may be part of the same integrated circuit or in separate integrated circuits.

A non-exhaustive list of examples for processors 606 and 626 includes a central processing unit (CPU), a digital signal processor (DSP), a reduced instruction set computer (RISC), a complex instruction set computer (CISC) and the like. Furthermore, processors 606 and 626 may be part of an application specific integrated circuit (ASIC) or may be a part of an application specific standard product (ASSP).

A non-exhaustive list of examples for memories 606 and 626 includes any combination of the following:

a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;

b) optical devices, such as compact disk read only memory (CD ROM), and the like; and

c) magnetic devices, such as a hard disk, a floppy disk, a magnetic tape, and the like.

Memory 608 may store executable code 609 which, when executed by processor 606, may cause mobile device 102 to implement relevant portions of any or a combination of the methods of Figures 2, 3, 4 and 5.

Memory 628 may store executable code 629 which, when executed by processor 626, may cause smart card reader 104 to implement relevant portions of any or a combination of the methods of Figures 2, 3, 4 and 5.

The preceding explanation uses the example of mobile device 102, smart card reader 104 and wireless communication link 106. However, embodiments of the invention are equally applicable to any two devices (not necessary mobile devices) where the security and/or authenticity of the communication link (not necessarily wireless) between the two devices are possibly unsatisfactory. Similarly, other embodiments of the invention are equally applicable to any two devices (not necessarily mobile devices) where this is a need to securely exchange information displayed on one of the devices with the other device.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the scope of the claims.

**Claims**

1. A first device (104) comprising:

a display (110) configured to show a confidential value;
a first communication interface (624) through which said first device is able to communicate with a second device (102);
a first processor (626); and
a memory (628) storing first executable code means (629) which, when executed by said first processor, causes said confidential value to be cleared from said display after an indication is received from said second device via said first communication interface that input expected to be identical to said confidential value has been inputted at said second device,

wherein said input is not included in said indication.

2. The first device of claim 1, wherein said first executable code means, when executed by said first processor, also causes a non-confidential value to be shown on said display after said confidential value has been cleared from said display.

3. The first device of claim 2, wherein said non-confidential value comprises a random value.

4. The first device of any one of claims 1 to 3, wherein said first executable code means, when executed by said first processor, causes said first device to generate a first key from said confidential value after said first device receives said indication via said first communication interface, wherein said first key is stronger than said confidential value.

5. The first device of any one of claims 1 to 4, wherein said first communication interface comprises a wireless communication interface.

6. A system (100) comprising:

   the first device (104) of any one of claims 1 to 5; and
   a second device (102) comprising:

      an input component (114) to enable input of said confidential value; and
      a second communication interface (604) able to transmit said indication to said first device;

   wherein said first device is arranged to clear said information from said display after said first device receives said indication via said first communication interface and
   wherein said input is not included in said indication.

7. The system of claim 6 when dependent from claim 4, wherein transmission of said indication from said second device to said first device causes said second device to generate a second key from said input, wherein said second key is identical to said first key if said input is identical to said confidential value.

8. The system of claim 6 when dependent from claim 5, wherein said second communication interface comprises a wireless communication interface.

9. A method comprising:

   showing a confidential value on a display (110) of a first device (104) in order to enable said confidential value to be exchanged with a second device (102); and

clearing said confidential value from said display after an indication is received from said second device that input expected to be identical to said confidential value has been inputted at said second device, wherein said input is not included in said indication.

10. The method of claim 9, further comprising:

   showing a non-confidential value on said display after said confidential value is cleared from said display.

11. The method of claim 9, further comprising:

   showing a random value on said display after said confidential value is cleared from said display.

12. The method of any one of claims 9 to 11, further comprising:

   having said first device generate a first key from said confidential value, wherein said first key is stronger than said confidential value; and
   having said second device generate a second key from said input, wherein said second key is identical to said first key if said input is identical to said confidential value.

13. A computer readable medium (628) comprising code means (629) executable by a processor (626) of the first device (104) of any one of claims 1 to 5 for causing a display (110) of said first device to show a confidential value and to clear said confidential value from said display after an indication is received from a second device (102) that input expected to be identical to said confidential value has been inputted at said second device, wherein said input is not included in said indication.

100

108

104

106

15379258

110

112

Enter passphrase:
1 5 3 _ _ _ _ _

102

114

FIG. 1

202 —

ESTABLISH LINK BETWEEN
MOBILE DEVICE AND SMART
CARD READER

204 —

ESTABLISH SECRET *S* ON
MOBILE DEVICE AND
SMART CARD READER

206 —

INITIATE BOOTSTRAPPING PROCESS

208 —

MOBILE DEVICE REQUESTS FROM SMART CARD READER
A LIST OF ITS SUPPORTED ALGORITHMS

210 —

SMART CARD READER SENDS LIST OF ITS
SUPPORTED ALGORITHMS TO MOBILE DEVICE

212 —

MOBILE DEVICE SELECTS ALGORITHMS AND SENDS
INDICATION OF SELECTED ALGORITHMS TO
SMART CARD READER

214 —

MOBILE DEVICE
AND SMART
CARD READER
EACH GENERATE
SYMMETRIC
KEY *K1*

216 —

MOBILE DEVICE
AND SMART
CARD READER
EACH GENERATE
SYMMETRIC
KEY *K2*

218 —

MOBILE DEVICE
AND SMART
CARD READER
EACH HASH ALL
PACKETS SENT
AND RECEIVED

220 —

MOBILE DEVICE AND SMART CARD READER EACH
GENERATE SYMMETRIC KEY *K3* FROM *K1*, *K2* AND HASH

FIG. 2

302 —

PRESS BUTTON ON
SMART CARD READER

306 —

OPEN APPROPRIATE
APPLICATION ON
MOBILE DEVICE

304 —

SMART CARD READER
DISPLAYS SECRET $S$

308 —

COPY SECRET $S$ THAT IS DISPLAYED ON
SMART CARD READER TO APPLICATION ON
MOBILE DEVICE

310 —

MOBILE DEVICE INITIATES BOOTSTRAPPING
PROCESS

314 —

TIMEOUT?

YES

NO

312 —

SMART CARD READER
CLEARS ITS DISPLAY

316 —

SMART CARD READER
DISPLAYS A NON-CONFIDENTIAL
VALUE IN ITS DISPLAY

FIG. 3

400

402

$S, f$

404

GENERATE
RANDOM NUMBER $R_A$

406

GENERATE
PUBLIC KEY

$P1 = f(S)^{R_A} \bmod p$

AND SEND TO
SMART CARD
READER

408

GENERATE
SYMMETRIC KEY

$K1 = P2^{R_A} \bmod p$

410

412

$S, f$

414

GENERATE
RANDOM NUMBER $R_B$

416

GENERATE
PUBLIC KEY

$P2 = f(S)^{R_B} \bmod p$

AND SEND TO
MOBILE DEVICE

418

GENERATE
SYMMETRIC KEY

$K1 = P1^{R_B} \bmod p$

# FIG. 4

500

502

502

$T$

504

GENERATE
RANDOM NUMBER $R_C$

506

GENERATE
PUBLIC KEY

$P3 = T^{R_C} \bmod p$

AND SEND TO
SMART CARD
READER

508

GENERATE
SYMMETRIC KEY

$K2 = P4^{R_C} \bmod p$

510

512

$T$

514

GENERATE
RANDOM NUMBER $R_D$

516

GENERATE
PUBLIC KEY

$P4 = T^{R_D} \bmod p$

AND SEND TO
MOBILE DEVICE

518

GENERATE
SYMMETRIC KEY

$K2 = P3^{R_D} \bmod p$

# FIG. 5

SMART CARD READER 104

CODE 629

MEMORY 628

COMMUNICATION INTERFACE 624

ANTENNA 622

PROCESSOR 626

DISPLAY 110

BUTTON 112

106

ANTENNA 602

COMMUNICATION INTERFACE 604

MEMORY 608

CODE 609

KEYBOARD 114

PROCESSOR 606

MOBILE DEVICE 102

FIG. 6

Europäisches
Patentamt

European
Patent Office

Office européen
des brevets

**EUROPEAN SEARCH REPORT**

Application Number

EP 09 17 3559

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/051139 A1 (KUBOTA SHINJI) 13 March 2003 (2003-03-13) * the whole document * | 1-12 | INV. G06F21/02 G06F21/04 |
| X | SELECTSOFT PUBLISHING: "typing tutor7" ., 1996, XP002266910 * page 8, paragraph 1 * | 1-3,6, 9-11,13 | |
| A | EP 1 253 500 A (NOKIA CORPORATION) 30 October 2002 (2002-10-30) * figure 2 * | 1,6,9,13 | |

| TECHNICAL FIELDS SEARCHED (IPC) |
|---|
| G06F |

The present search report has been drawn up for all claims

| Place of search | Date of completion of the search | Examiner |
|---|---|---|
| The Hague | 11 November 2009 | Sigolo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 141 627 A1**

## ANNEX TO THE EUROPEAN SEARCH REPORT
## ON EUROPEAN PATENT APPLICATION NO.

EP 09 17 3559

11-11-2009

| Patent document cited in search report | | Publication date | Patent family member(s) | | Publication date |
|---|---|---|---|---|---|
| US 2003051139 | A1 | 13-03-2003 | AT | 328443 T | 15-06-2006 |
| | | | AU | 2002330456 B2 | 18-09-2008 |
| | | | BR | 0205884 A | 23-12-2003 |
| | | | CA | 2433319 A1 | 13-03-2003 |
| | | | CN | 1476721 A | 18-02-2004 |
| | | | DE | 60211919 T2 | 14-12-2006 |
| | | | EP | 1422938 A1 | 26-05-2004 |
| | | | WO | 03021953 A1 | 13-03-2003 |
| | | | JP | 3707407 B2 | 19-10-2005 |
| | | | JP | 2003069923 A | 07-03-2003 |
| | | | SG | 96365 A1 | 28-04-2005 |
| | | | TW | 585007 B | 21-04-2004 |
| | | | US | 2008028217 A1 | 31-01-2008 |
| EP 1253500 | A | 30-10-2002 | AT | 433235 T | 15-06-2009 |
| | | | WO | 02089400 A1 | 07-11-2002 |
| | | | US | 2004181674 A1 | 16-09-2004 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6226383 B, Jablon